# FASCICULE DE BREVET EUROPEEN

(11) **EP 0 895 895 B1**
(45) Date de publication et mention de la délivrance du brevet: **16.05.2001**
(21) Numéro de dépôt: 98401581.8
(22) Date de dépôt: 25.06.1998
(51) Int. Cl.: B60N 2/48

(54) **Siège pour véhicule automobile**
Sitz für Kraftfahrzeug
Seat for automotive vehicle

(30) Priorité: 04.08.1997 FR 9709971
(43) Date de publication de la demande: 10.02.1999
(73) Titulaire: AUTOMOBILES PEUGEOT, 75116 Paris (FR); AUTOMOBILES CITROEN, 92200 Neuilly-sur-Seine (FR)
(72) Inventeur: Roy, Jean-Pascal, 94300 Vincennes (FR)
(74) Mandataire: Lanceplaine, Jean-Claude

(56) Documents cités:
- EP-A- 0 516 856
- EP-A- 0 743 224
- DE-A- 3 621 278
- DE-A- 4 219 941
- DE-A- 4 410 713
- DE-A- 19 513 777
- GB-A- 1 378 581
- US-A- 3 174 799

## Description

La présente invention a pour objet un siège pour véhicule automobile.

Les sièges des véhicules automobiles sont généralement équipés d'appuis-tête qui permettent de protéger les vertèbres cervicales des passagers en cas de choc.

Les appuis-tête sont montés sur le bord supérieur du dossier de chaque siège et peuvent coulisser verticalement de façon à être positionnés en fonction de la morphologie de chaque passager.

Le montage de tels appuis-tête par exemple sur les sièges arrière du véhicule présentent des inconvénients.

En effet, lorsque les sièges arrière ne sont pas occupés par des passagers, les appuis-tête n'ont aucune fonction et ils gênent la visibilité vers l'arrière du véhicule pour le conducteur.

Cette visibilité est d'autant plus diminuée lorsque les sièges arrière comportent un appui-tête central situé dans l'axe du rétroviseur.

D'autre part, la présence des appuis-tête sur les dossiers des sièges arrière est gênante notamment lorsque ceux-ci doivent être rabattus pour augmenter momentanément le volume de coffre et ils doivent être démontés pour pouvoir rabattre complètement ces dossiers.

On connaît dans le brevet EP-A-0 516 856, un siège pour véhicule automobile, du type comprenant au moins un élément de siège comportant, sur sa face avant, un logement de réception d'un appui-tête monté pivotant entre une position escamotée dans ce logement et une position en saillie par rapport audit logement.

On connaît également dans le brevet DE-A-42 19 941, un siège pour véhicule automobile, du type comprenant au moins un élément de siège comportant, sur sa face avant, un logement de réception d'un appui-tête monté coulissant verticalement entre une position escamotée dans ce logement et une position déployée dans le prolongement dudit élément de siège.

L'invention a pour but de proposer un siège muni d'un appui-tête qui permet d'éviter les inconvénients précédemment mentionnés.

L'invention a donc pour objet un siège pour véhicule automobile, du type comprenant au moins un élément de siège supportant un appui-tête pivotant, caractérisé en ce que ledit élément de siège comporte sur sa face avant un logement de réception de l'appui-tête monté pivotant sur un support par l'intermédiaire d'un axe horizontal entre une position escamotée dans ce logement et une position déployée dans le prolongement dudit élément de siège, ledit axe traversant l'appui-tête et ledit support comportant des moyens de verrouillage de l'appui-tête au moins dans sa position déployée.

Selon d'autres caractéristiques de l'invention :
- l'élément de siège est formé par un dossier dudit siège,
- l'élément de siège est formé par un accoudoir monté pivotant sur ledit siège entre une position horizontale et une position verticale,
- le support est formé par une chape comportant une portion intermédiaire de fixation dans le logement ménagé dans ledit élément de siège et deux branches latérales entre lesquelles est monté pivotant ledit axe horizontal,
- les moyens de verrouillage sont formés par un bouton de manoeuvre fixé à une extrémité de l'axe et par une platine fixée à l'autre extrémité de cet axe et comportant au moins un ergot destiné à coopérer avec au moins un orifice ménagé dans la branche latérale adjacente de la chape, ledit axe étant maintenu dans la position d'enclenchement dudit ergot dans l'orifice correspondant par un organe de rappel,
- les moyens de verrouillage sont formés par un organe de traction relié à une extrémité de l'axe et par une platine fixée sur ladite extrémité et comportant au moins un ergot destiné à coopérer avec au moins un orifice ménagé dans la branche latérale adjacente de la chape, ledit axe étant maintenu dans la position d'enclenchement dudit ergot dans l'orifice correspondant par un organe de rappel,
- les moyens de verrouillage sont formés par une roue dentée solidaire d'une extrémité de l'axe et par un cliquet monté pivotant sur la branche latérale correspondante de la chape et destiné à coopérer avec ladite roue dentée pour maintenir l'appui-tête dans la position désirée,
- l'appui-tête est relié à un organe de fermeture du logement dans la position déployée dudit appui-tête.

L'invention sera mieux comprise à l'aide de la description qui va suivre, donnée à titre d'exemple, et faite en référence aux dessins annexés, sur lesquels :
- la Fig. 1 est une vue schématique d'un siège arrière de véhicule automobile, conforme à l'invention,
- la Fig. 2 est une vue schématique en coupe selon le plan P de la Fig. 1,
- la Fig. 3 est une vue en perspective du support d'un appui-tête,
- la Fig. 4 est une vue schématique en coupe transversale montrant un mode de réalisation des moyens de verrouillage d'un appui-tête monté dans un accoudoir,
- la Fig.5 est une vue schématique en coupe transversale montrant un mode de réalisation des moyens de verrouillage d'un appui-tête monté dans un dossier de siège,
- la Fig. 6 est une demi-vue schématique en coupe transversale montrant un autre mode de réalisation des moyens de verrouillage d'un appui-tête.

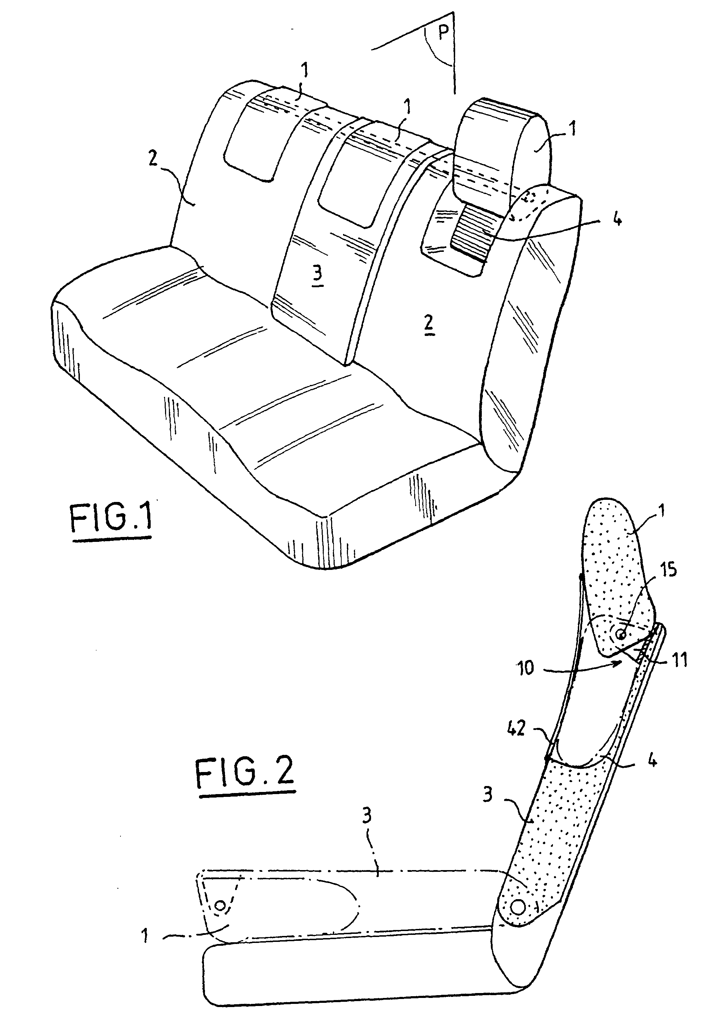

Sur la Fig. 1, on a représenté schématiquement un siège arrière d'un véhicule automobile qui comporte au moins un appui-tête.

L'appui-tête 1 est monté sur un élément de siège qui est constitué, soit par un dossier 2, soit par un accoudoir 3.

D'une manière générale, l'élément de siège formé par le dossier 2 ou l'accoudoir 3 comporte sur sa face avant un logement 4 de réception de l'appui-tête 1.

Ainsi que représenté sur les Figs.1 et 2, l'appui-tête 1 est monté pivotant sur un support 10 entre une position escamotée dans le logement 4 et une position déployée dans le prolongement du dossier 2 ou de l'accoudoir 3.

Le support 10 comporte des moyens de verrouillage de l'appui-tête 1 au moins dans sa position déployée et qui seront décrits ultérieurement.

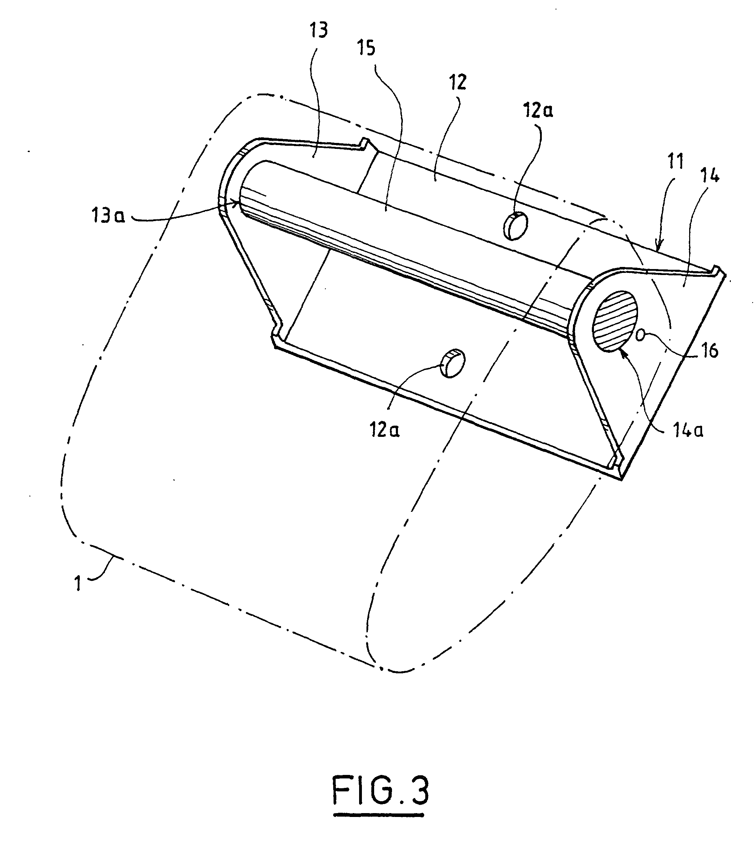

Ainsi que représenté sur les Figs. 2 et 3, le support 10 de l'appui-tête 1 est formé par une chape 11 comportant une portion intermédiaire 12 et deux branches latérales, respectivement 13 et 14.

La portion intermédiaire 12 comporte des orifices 12a destinés au passage d'organes de fixation, non représentés, de la chape 11 sur l'armature du dossier 2 ou de l'accoudoir 3.

Selon une variante, la portion intermédiaire 12 de la chape 11 peut être fixée sur l'armature du dossier 2 ou de l'accoudoir 3 par exemple par soudage.

Chaque branche latérale 13 et 14 de la chape 11 comporte un orifice, respectivement 13a et 14a.

Le support 10 de l'appui-tête 1 comporte également un axe horizontal 15 monté pivotant dans les orifices 13a et 14a des branches 13 et 14 et qui traverse l'appui-tête 1.

Ainsi, l'appui-tête 1 est monté pivotant entre les branches latérales 13 et 14 de la chape 11 entre une position escamotée dans le logement 4 et une position déployée dans le prolongement du dossier 2 ou de l'accoudoir 3.

L'appui-tête 1 est maintenue au moins dans sa position déployée par des moyens de verrouillage.

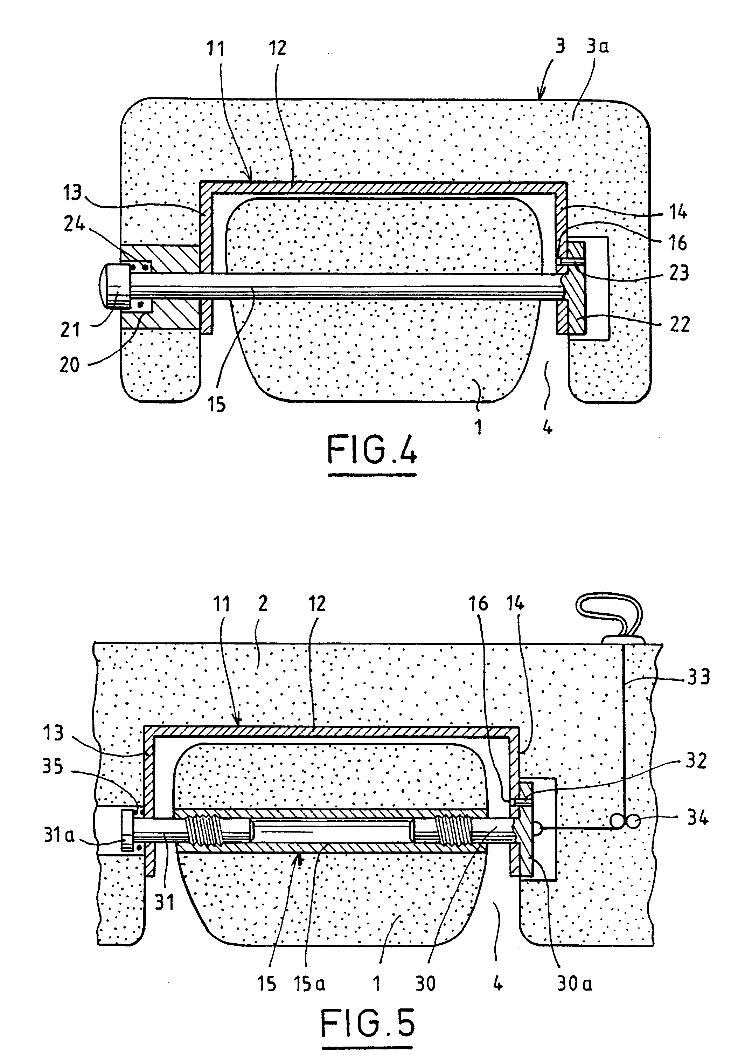

En se reportant maintenant à la Fig.4, on va décrire un mode de réalisation des moyens de verrouillage de l'appui-tête 1 dans sa position déployée dans le cas où cet appui-tête 1 est monté dans l'accoudoir 3.

Ainsi que représenté sur cette figure, un manchon 20, par exemple en matière plastique, est monté dans la matelassure 3a de l'accoudoir 3 et les moyens de verrouillage sont formés, d'une part, par un bouton de manoeuvre 21 fixé, par des moyens appropriés, à une extrémité de l'axe 15 et, d'autre part, par une platine 22 fixée à l'autre extrémité de cet axe 15.

La platine 22 comporte, sur sa face en regard de la branche 14 de la chape 11, un ergot 23 destiné à coopérer avec un orifice 16 ménagé dans ladite branche latérale 14 de la chape 11.

L'appui-tête 1 est solidaire en translation et en rotation avec l'axe 15 et la platine 22.

L'axe 15 est maintenu dans la position d'enclenchement de l'ergot 23 dans l'orifice 16 par un organe de rappel 24 constitué par exemple par un ressort interposé entre le bouton de manoeuvre 21 et le fond du manchon 20.

Le jeu entre les bords latéraux de l'appui-tête 1 et les faces internes du logement 4 est supérieur à la course de l'organe de rappel 24 et cette course est supérieure à la longueur d'enclenchement de l'ergot 23 dans l'orifice 16. L'orifice 16 est disposé à un emplacement qui correspond à la position déployée de l'appui-tête 1 pour verrouiller cet appui-tête 1 dans ladite position déployée.

Selon une variante, la platine 22 peut comporter deux ergots 23 et la branche latérale 14 de la chape 11 peut comporter deux orifices 16 destinés à coopérer avec lesdits ergots 23 pour verrouiller l'appui-tête 1 dans sa position escamotée et dans sa position déployée.

Pour déplacer l'appui-tête 1, il suffit à l'utilisateur de faire pivoter cet appui-tête 1 pour le sortir du logement 4 et l'amener dans sa position déployée située dans le prolongement de l'accoudoir 3.

Pour cela, l'utilisateur appui sur le bouton 21 à l'encontre de la force exercée par l'organe de rappel 24 pour déplacer en translation l'axe 15, l'appui-tête 1 et la platine 22 de façon à dégager l'ergot 23 de l'orifice 16.

Ensuite, l'utilisateur fait pivoter l'appui-tête 1.

L'organe de rappel 24 permet d'enclencher automatiquement l'ergot 23 dans l'orifice 16 correspondant lorsque cet ergot 23 se trouve en face dudit orifice 16.

Dans le cas où la platine 22 comporte deux ergots 23 destinés à coopérer chacun avec un orifice 16, l'utilisateur effectue les mêmes manoeuvres pour déplacer l'appui-tête 1 d'une position à l'autre.

En se reportant maintenant à la Fig. 5, on va décrire un mode de réalisation des moyens de verrouillage dans le cas où l'appui-tête lest monté pivotant dans un logement 4 ménagé dans le dossier 2.

Dans ce cas, l'axe 15 est formé, d'une part, par un tube 15a solidaire de l'appui-tête 1 et comportant à chaque extrémité un crantage interne et, d'autre part, par deux embouts, respectivement 30 et 31, munis chacun d'un crantage complémentaire de celui des extrémités du tube 15a. Les embouts 30 et 31 sont emmanchés à force dans les extrémités dudit tube et sont maintenus par la coopération des crantages.

Selon une variante, les extrémités du tube 15a peuvent recevoir une douille dans laquelle est pratiqué le crantage coopérant avec celui de l'embout associé. Cette disposition est préférable dans le cas où le tube 15a est métallique. Les douilles crantées peuvent alors être réalisées en matière plastique.

L'embout 30 traverse la branche latérale 14 de la chape 11 par l'orifice 14a et comporte à son extrémité libre une platine 30a qui comporte sur sa face en regard de la branche latérale 14 de la chape 11 au moins un ergot 32.

Cet ergot 32 est destiné à coopérer avec l'orifice 16 ménagé sur la branche latérale 14 de la chape 11 pour verrouiller l'appui-tête 1 dans sa position déployée située dans le prolongement du dossier 2.

D'autre part, l'embout 30 est relié à un organe de traction 33 constitué par exemple par une sangle dont l'extrémité libre débouche sur la face avant du dossier 2.

La sangle 33 est guidée à l'intérieur de la matelassure du dossier 2 par exemple par des galets 34.

L'embout 31 traverse la branche latérale 13 de la chape 11 par l'orifice 13a et comporte à son extrémité libre une platine 31a.

Un organe de rappel 35 constitué par exemple par un ressort, est interposé entre la platine 31a de l'embout 31 et la branche latérale 13 de la chape 11.

Cet organe de rappel 35 exerce une traction sur l'embout 31, le tube 15a, et l'embout 30 de façon à maintenir l'ergot 32 enclenché dans l'orifice 16 ménagé sur la branche latérale 14 de la chape 11.

Selon une variante, la platine 30a de l'embout 30 peut comporter deux ergots 32 destinés à coopérer chacun avec un orifice 16 ménagé sur la branche latérale 14 de la chape 11 de façon à verrouiller l'appui-tête 1 dans la position escamotée à l'intérieur du logement 4 et dans la position déployée située dans le prolongement du dossier 2.

Un jeu est ménagé entre les bords latéraux de l'appui-tête 1 et les bords du logement 4 et ce jeu est supérieur à la course de l'organe de rappel 35 tandis que la course de cet organe de rappel 35 est supérieure à la longueur d'enclenchement de l'ergot 32 dans l'orifice 16.

Pour déployer l'appui-tête 1, l'utilisateur fait tourner cet appui-tête autour de l'axe 15 pour l'amener dans le prolongement du dossier 2.

Le verrouillage de l'appui-tête 1 dans sa position déployée s'effectue automatiquement lorsque l'ergot 32 se trouve en face de l'orifice 16 et cela grâce à l'organe de rappel 35 qui exerce une traction sur le tube 15a.

Pour déverrouiller l'appui-tête 1, l'utilisateur exerce une traction sur. la sangle 33 de façon à dégager l'ergot 32 de l'orifice 16 et l'utilisateur fait pivoter l'appui-tête 1 pour le ramener dans la position escamotée à l'intérieur du logement 4.

Dans le cas où la platine 30a comporte deux ergots 32 destinés à coopérer chacun avec un orifice 16, l'utilisateur effectue les mêmes manoeuvres pour déplacer l'appui-tête 1 d'une position à l'autre.

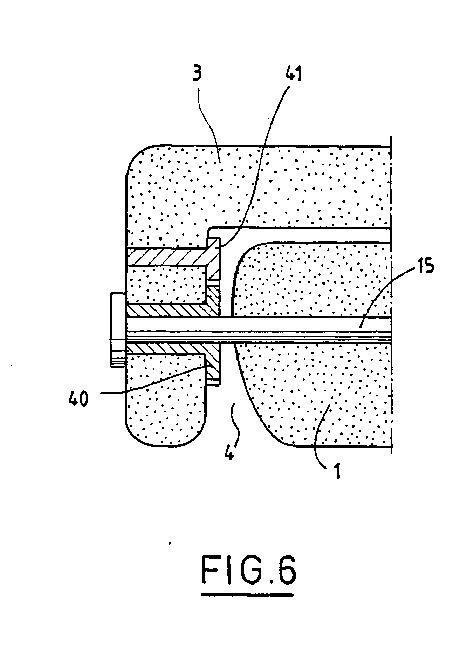

Selon un autre mode de réalisation représenté à la Fig. 6, les moyens de verrouillage sont formés par une roue dentée 40 solidaire d'une extrémité de l'axe 15 et par un cliquet 41 monté pivotant sur une branche latérale de la chape 11 et destiné à coopérer avec cette roue denrée 40 pour maintenir l'appui tête 1 dans la position désirée.

Ainsi, l'appui-tête 1 peut être placé dans des positions intermédiaires en fonction de la morphologie de l'utilisateur du siège.

Ainsi que représenté à la Fig. 2, l'appui-tête 1 est relié à un organe de fermeture 42 du logement 4 lorsque cet appui-tête 1 est dans sa position déployée.

Cet organe de fermeture 42 peut être constitué par une bande en matériau souple ou par tout autre organe approprié.

Par ailleurs, l'accoudoir 3 peut comporter, sur sa face opposée à celle comportant l'appui-tête 1, différents accessoires comme par exemple une tablette ou un porte gobelets.

De plus, l'accoudoir 3 est également équipé de moyens de verrouillage, non représentés, dans sa position verticale formant une surface d'appui pour un passager.

Dans le cas où le siège arrière du véhicule est constitué par une banquette, les moyens de verrouillage des appuis-tête 1 peuvent être constitués par un seul élément assurant le verrouillage et le déverrouillage de l'ensemble des appuis-tête associés à cette banquette.

Chaque appui-tête peut être également équipé d'un dispositif de commande automatique de pivotement associé à un détecteur de présence d'un occupant sur le siège correspondant de façon à déployer cet appui-tête dès que le siège est occupé et inversement.

Le siège selon l'invention peut être utilisé aussi bien comme siège avant ou comme siège arrière dans un véhicule automobile.

## Revendications

1. Siège pour véhicule automobile, du type comprenant au moins un élément de siège (2, 3) supportant un appui-tête (1) pivotant, caractérisé en ce que ledit élément de siège (2, 3) comporte sur sa face avant un logement (4) de réception de l'appui-tête (1) monté pivotant sur un support (10) par l'intermédiaire d'un axe horizontal (15, 15a) entre une position escamotée dans ce logement (4) et une position déployée dans le prolongement dudit élément du siège (2, 3), ledit axe (15, 15a) traversant l'appui-tête (1) et ledit support (10) comportant des moyens de verrouillage de l'appui-tête (1) au moins dans sa position déployée.

2. Siège selon la revendication 1, caractérisé en ce que l'élément de siège est formé par un dossier (2) dudit siège.

3. Siège selon la revendication 1, caractérisé en ce que l'élément de siège est formé par un accoudoir (3) monté pivotant sur ledit siège entre une position horizontale et une position verticale.

4. Siège selon l'une quelconque des revendications 1 à 3, caractérisé en ce que le support (10) est formé par une chape (11) comportant une portion intermédiaire (12) de fixation dans le logement (4) ménagé dans ledit élément de siège (2, 3) et deux branches latérales (13, 14) entre lesquelles est monté pivotant ledit axe horizontal (15, 15a).

5. Siège selon l'une quelconque des revendications 1 à 3, caractérisé en ce que les moyens de verrouillage sont formés par un bouton de manoeuvre (21) fixé à une extrémité de l'axe (15) et par une platine (22) fixée à l'autre extrémité de cet axe (15) et comportant au moins un ergot (23) destiné à coopérer avec au moins un orifice (16) ménagé dans la branche latérale (14) adjacente de la chape (11), ledit axe (15) étant maintenu dans la position d'enclenchement dudit ergot (23) dans l'orifice (16) correspondant par un organe de rappel (24).

6. Siège selon l'une quelconque des revendications 1 à 3, caractérisé en ce que les moyens de verrouillage sont formés par un organe de traction (33) relié à une extrémité de l'axe (15a) et par une platine (30, 30a) fixée sur ladite extrémité et comportant au moins un ergot (32) destiné à coopérer avec au moins un orifice (16) ménagé dans la branche latérale (14) adjacente de la chape (11), ledit axe (15a) étant maintenu dans la position d'enclenchement dudit ergot (32) dans l'orifice (16) correspondant par un organe de rappel (35).

7. Siège selon l'une quelconque des revendications 1 à 3, caractérisé en ce que les moyens de verrouillage sont formés par une roue dentée (40) solidaire d'une extrémité de l'axe (15) et par un cliquet (41) monté pivotant sur la branche latérale (13) correspondante de la chape (11) et destiné à coopérer avec ladite roue dentée (40) pour maintenir l'appui-tête (1) dans la position désirée.

8. Siège selon l'une quelconque des revendications précédentes, caractérisé en ce que l'appui-tête (1) est relié à un organe de fermeture (42) du logement (4) dans la position déployée dudit appui-tête (1).

## Claims

1. Seat for automobile, of the type comprising at least one seat element (2,3) supporting a pivoting headrest (1), characterised in that the said element (2,3) has on its front face a recess (4) to receive the headrest (1) which is mounted so as to pivot on a support (10) by way of horizontal shaft (15, 15a) between a position in which it is concealed in this recess (4) and deployed position in which it is opened out in an extension of the said seat element (2,3), the said shaft (15, 15a) passing through the headrest (1) and the said support (10) having means for locking the headrest (1) at least in its deployed position.

2. Seat as claimed in Claim 1, characterised in that the seat element is formed by a backrest (2) of the said seat.

3. Seat as claimed in Claim 1, characterised in that the seat element is formed by an armrest (3) which is mounted so as to pivot on the said seat between a horizontal position and a vertical position.

4. Seat as claimed in any one of Claims 1 to 3, characterised in that the support (10) is formed by a yoke (11) having an intermediate portion (12) for fixing in the recess (4) provided in the said seat element (2,3) and two lateral arms (13,14) between which the said horizontal shaft (15, 15a) is mounted so as to pivot.

5. Seat as claimed in any one of Claims 1 to 3, characterised in that locking means are formed by an operating button (21) fixed at one end of the shaft (15) and by a plate (22) fixed at the other end of the shaft (15) and having at least one lug (23) intended to co-operate with at least one opening (16) provided in the adjacent lateral arm (14) of the yoke (11), the said shaft (15) being held in the position of engagement of the said lug (23) in the corresponding opening (16) by a restoring device (24).

6. Seat as claimed in any one of Claims 1 to 3, characterised in that the locking means are formed by a traction device (33) connected to one end of the shaft (15a) and by a plate (30, 30a) fixed on the said end and having at least one lug (32) intended to co-operate with at least one opening (16) provided in the adjacent lateral arm (14) of the yoke (11), the said shaft (15a) being held in the position of engagement of the said lug (32) in the corresponding opening (16) by a restoring device.

7. Seat as claimed in any one of Claims 1 to 3,characterised in that the locking means are formed by a toothed wheel (40) integral with one end of the shaft (15) and by a pawl (41) mounted so as to pivot on the corresponding lateral arm (13) of the yoke (11) and intended to co-operate with the said toothed wheel (40) in order to keep the headrest (1) in the desired position.

8. Seat as claimed in any one of the proceeding claims, characterised in that the headrest (1) is connected to a device (42) for closure of the recess (4) in the deployed position of the said headrest (1).

## Patentansprüche

1. Sitz für Kraftfahrzeug der Art mit wenigstens einem Sitzelement (2, 3), welches eine schwenkbare Kopfstütze (1) trägt, dadurch gekennzeichnet, daß das Sitzelement (2, 3) auf seiner Vorderseite eine Aufnahme (4) zur Lagerung der Kopfstütze (1) aufweist, welche mittels einer horizontalen Achse (15, 15a) auf einem Träger (10) schwenkbar zwischen einer in diese Aufnahme (4) eingezogenen Position und einer in der Verlängerung des Sitzelementes (2, 3) ausgefahrenen Position angeordnet ist, wobei die Achse (15, 15a) die Kopfstütze (1) durchquert und der Träger (10) Vorrichtungen zur Verriegelung der Kopfstütze (1) wenigstens in ihrer ausgefahrenen Position aufweist.

2. Sitz gemäß Anspruch 1, dadurch gekennzeichnet, daß das Sitzelement von einer Rückenlehne (2) des Sitzes gebildet ist.

3. Sitz gemäß Anspruch 1, dadurch gekennzeichnet, daß das Sitzelement von einer Armlehne (3) gebildet ist, die auf dem Sitz schwenkbar zwischen einer horizontalen Position und einer vertikalen Position angeordnet ist.

4. Sitz gemäß irgendeinem der Ansprüche 1 bis 3, dadurch gekennzeichnet, daß der Träger (10) von einem Aufsatz (11) mit einem Zwischenbereich (12) zur Befestigung in der in dem Sitzelement (2, 3) angeordneten Aufnahme (4) und zwei Seitenarmen (13, 14) gebildet ist, zwischen welchen die horizontale Achse (15, 15a) schwenkbar angeordnet ist.

5. Sitz gemäß irgendeinem der Ansprüche 1 bis 3, dadurch gekennzeichnet, daß die Verriegelungsvorrichtungen von einem an einem Ende der Achse (15) befestigten Bedienknopf (21) und einer an dem anderen Ende dieser Achse (15) befestigten Platte (22) gebildet sind und wenigstens einen Nocken (23) aufweisen, welcher dafür bestimmt ist, mit wenigstens einer in dem an den Aufsatz (11) angrenzenden Seitenarm (14) ausgebildeten Öffnung (16) zusammenzuwirken, wobei die Achse (15) von einem Rückstellorgan (24) in der Einrastposition des Nockens (23) in der entsprechenden Öffnung (16) gehalten wird.

6. Sitz gemäß irgendeinem der Ansprüche 1 bis 3, dadurch gekennzeichnet, daß die Verriegelungsvorrichtungen von einem mit einem Ende der Achse (15a) verbundenen Zugorgan (33) und einer an dem Ende befestigten Platte (30, 30a) gebildet sind und wenigstens einen Nocken (32) aufweisen, welcher dafür bestimmt ist, mit wenigstens einer in dem an den Aufsatz (11) angrenzenden Seitenarm (14) ausgebildeten Öffnung (16) zusammenzuwirken, wobei die Achse (15a) von einem Rückstellorgan (35) in der Einrastposition des Nockens (32) in der entsprechenden Öffnung (16) gehalten wird.

7. Sitz gemäß irgendeinem der Ansprüche 1 bis 3, dadurch gekennzeichnet, daß die Verriegelungsvorrichtungen von einem einstückig mit einem Ende der Achse (15) ausgebildeten Zahnrad (40) und von einer Sperrung (41) gebildet sind, welche schwenkbar auf dem entsprechenden Seitenarm (13) des Aufsatzes (11) angeordnet und dafür bestimmt ist, mit dem Zahnrad (40) zusammenzuwirken, um die Kopfstütze (1) in der gewünschten Position zu halten.

8. Sitz gemäß irgendeinem der vorherigen Ansprüche, dadurch gekennzeichnet, daß die Kopfstütze (1) mit einem Schließorgan (42) für die Aufnahme (4) in der ausgefahrenen Position der Kopfstütze (1) verbunden ist.
